Europäisches Patentamt

(19) European Patent Office

Office européen des brevets

(11) Publication number: **0 106 484**
**B1**

(12) **EUROPEAN PATENT SPECIFICATION**

(45) Date of publication of patent specification: **25.02.87**

(21) Application number: **83305095.8**

(22) Date of filing: **02.09.83**

(51) Int. Cl.⁴: **F 16 K 3/06,** F 16 K 31/56,
F 02 D 17/04

(54) **Engine shutdown device.**

(30) Priority: **03.09.82 CA 410743**

(43) Date of publication of application:
**25.04.84 Bulletin 84/17**

(45) Publication of the grant of the patent:
**25.02.87 Bulletin 87/09**

(84) Designated Contracting States:
**DE GB SE**

(56) References cited:
**FR-A-2 251 767**
**GB-A-1 112 144**
**GB-A-1 429 650**
**US-A-2 884 222**
**US-A-4 215 845**
**US-A-4 285 495**

(73) Proprietor: **BRALORNE RESOURCES LIMITED**
**2900 - 205 - 5th Avenue S.W.**
**Calgary Alberta T2P 2V7 (CA)**

(72) Inventor: **Krepela, Joseph**
**3523-34A Avenue**
**Edmonton Alberta T6L 3Y8 (CA)**
Inventor: **Friedrich, Jaromir**
**10625-128 Street**
**Edmonton Alberta T5N 1W6 (CA)**

(74) Representative: **Purvis, William Michael**
**Cameron et al**
**D. Young & Co. 10 Staple Inn**
**London WC1V 7RD (GB)**

Courier Press, Leamington Spa, England.

## Description

The invention relates to an engine shutdown device and, more particularly, to an engine shutdown valve utilised on an engine induction manifold where space is minimal.

When using diesel engines, air supply cut off valves are useful if it is desirable quickly to shutdown the engine for safety purposes. Such a condition under which it would be so desirable would be where there exist combustible substances about the engine as may be the case when oil or gas wells are drilled. Further, mechanical malfunctions may cause the engine to overspeed thus creating the potential for economic loss. This is obviously undesirable and an engine cut off valve may be used to eliminate the possibility of such loss.

Engine shutdown valves are disclosed, for example, in our US Patents 4 215 845 and 4 285 495. These devices are satisfactory for the purposes under which they are used but they have the disadvantage in that they are too large for some applications.

United States Patent US—A—2 884 222 discloses an engine air cut-off device wherein a slide plate is movable longitudinally and in the plane thereof, to obstruct an engine air inlet duct. Since the slide projects laterally of the duct by its full extent in the inoperative position of the device, it uses up a considerable amount of space.

British Patent GB—A—1 429 650 discloses a valve wherein a disc is mounted on an arm pivotable about an axis and is spring biassed for movement from a valve open position to a valve closed position. A pivotal latch, controlled by a trip mechanism in a housing projecting from a main valve housing, is provided adjacent the position of the disc in the valve open position to hold the disc in that position. The valve is intended for use as an electrically operated manually re-set valve for the oil supply of an oil fired boiler.

According to the invention, there is provided an engine shutdown device to be provided in the induction manifold of an engine and comprising a substantially circular gate valve movable within a valve chamber about an axis between an open position and a closed position, a gate lever mounting the gate valve for pivotal movement about the axis, latching means to hold the gate valve and the gate lever in the open position, release means to release the latching means and movement means acting on a portion of the gate lever to move the gate valve and the gate lever from the open to the closed position and back, characterised in that the latching, release and movement means are positioned in a latch chamber of generally cylindrical cross-sectional configuration located exteriorly of and immediately adjacent to the valve chamber and the induction manifold between the axis and the gate valve so that the gate lever passes through the latch chamber to the gate valve, said portion of the gate lever being aligned with the latching, release and movement means within the latch chamber.

The invention is diagrammatically illustrated by way of example with reference to the accompanying drawings in which:

Figure 1 shows an engine shutdown valve according to one embodiment of the invention installed on an engine induction manifold;

Figure 2 is a view taken on line II—II in Figure 1;

Figure 3 is a view taken on line III—III in Figure 1;

Figure 4 is a view taken on the line IV—IV in Figure 3;

Figure 5 is an enlarged plan view of a gate lever guide; and

Figures 6—9 are views of alternative embodiments of latching, release and movement mechanisms of the engine shutdown valve.

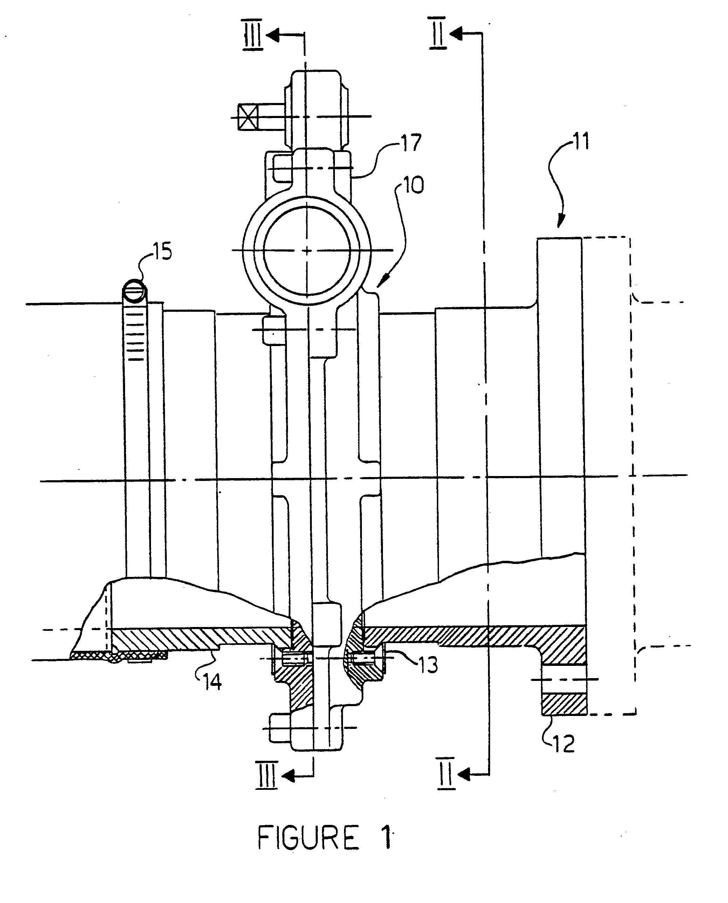

Referring to the drawings, an engine shutdown valve is shown generally at 10 in Figure 1 in its installed position within an engine induction manifold shown generally at 11. The induction manifold includes an area where the shutdown valve 10 is installed. Within this area, a flange connection nozzle 12 is connected on the upstream end to the engine manifold and on the downstream end to the shutdown valve 10 by cap screws 13. On the opposite side of the shutdown valve 10, a hose connection nozzle 14 is secured to the shutdown valve by cap screws 13 and is attached to the engine manifold 11 by a clamp 15.

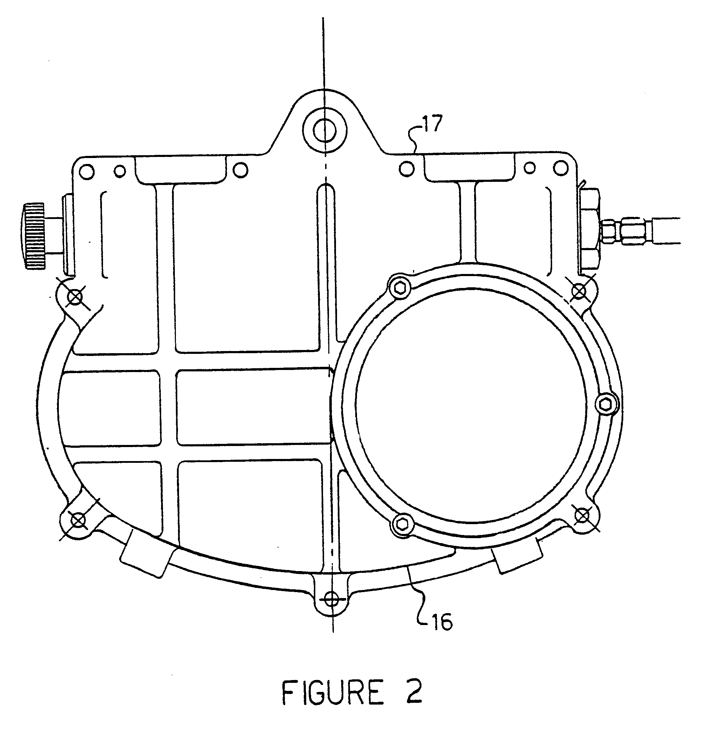

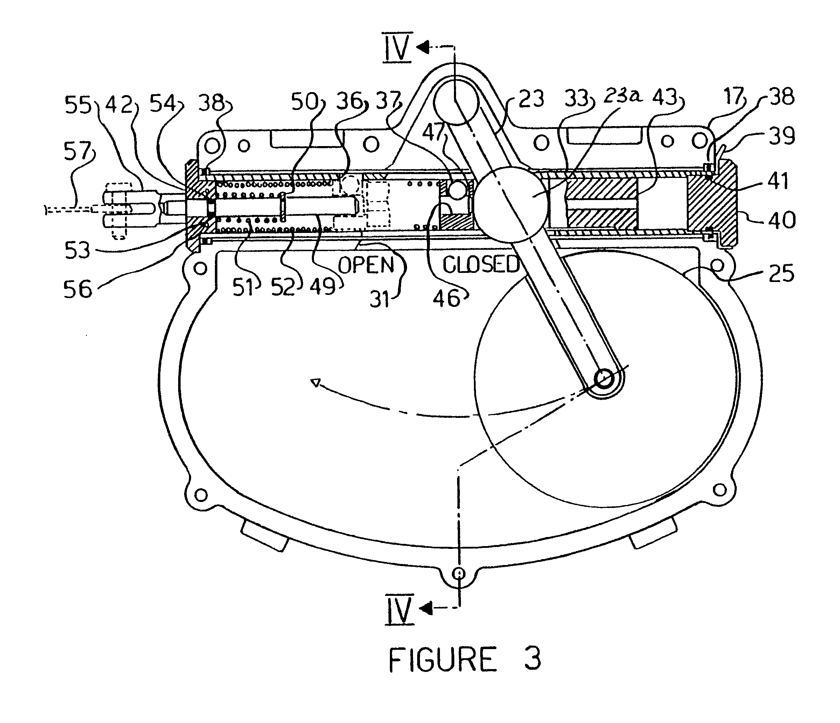

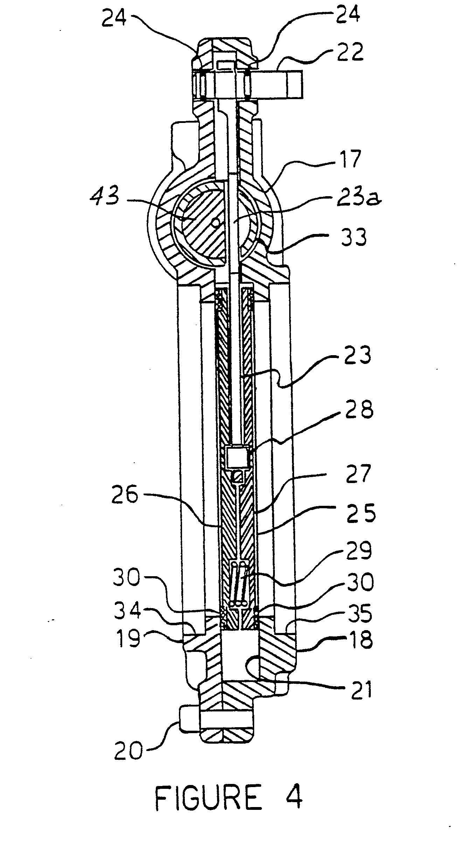

The engine shutdown valve 10 has a valve chamber 16 and a cylindrical latch chamber 17 (Figure 2). The valve and latch chambers 16, 17 (Figure 3) are defined by a body 18 and a body cover 19 held together by cap screws 20. The body 18 has a step portion 21 that defines a recess between the body 18 and the body cover 19 (Figure 4). Recessed bores 34, 35 are provided in the body cover 19 and the body 18 respectively for attachment of various nozzle configurations as dictated by the particular induction system requirement.

A pin 22 is positioned adjacent the latch chamber 17 and a gate lever 23 pivots about the pin 22 which is sealed with O-rings 24.

The gate lever 23 extends from the pin 22 to a gate valve shown generally at 25 and has a disc shaped intermediate portion 23a. The gate valve 25 comprises two gate halves 26, 27 and a gate locating pin 28 which retains the gate lever 23 in the gate valve 25. Gate spreader springs 29 act outwardly on the gate halves 26, 27 and are located around the periphery of the gate valve 25. They act to separate the two gate halves 26, 27 and, thereby, provide a better seal between urethane gate seals 30 attached to the gate halves 26, 27 and the body and body cover 18, 19, respectively.

In the upper portion of the valve chamber 16, an opening 31 is provided for movement of the gate lever 23. The cylindrical latch chamber 17 is formed above the opening 31. A guide cylinder 33 is inserted within the latch chamber 17 and extends throughout its length.

O-rings 38 are positioned at both ends of the guide cylinder 33 and act as seals. At one end of the guide cylinder 33, a lock washer 39 is provided and a threaded plug 40 is inserted into matching threads on the inside of the guide cylinder 33. An O-ring 41 seals the plug 40.

A spindle plug 42 at the opposite end of the guide cylinder 33 is inserted into the guide cylinder 33 and retained by adhesive and by two plug locking pins 56. These pins 56 also pass through the guide cylinder 33 and retain it within the latch chamber 17.

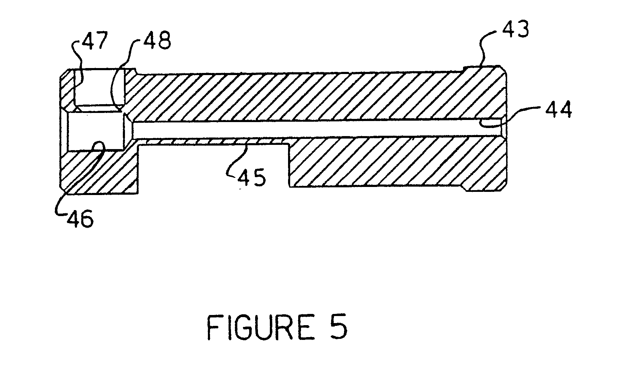

A gate lever guide 43 (more clearly shown in Figure 5) is inserted into the guide cylinder 33 and is reciprocable therein. The gate lever guide 43 has a port 44 drilled along its length for purposes which will be apparent hereafter. A recess 45 is machined in the gate lever guide 43 to allow entry and passage of the gate lever 23, the recess 45 receiving the disc shaped portion 23a of the gate valve lever 23. A second recess 46 is drilled in the end of the gate lever guide 43 along its axis. The second recess 46 is larger than the port 44 and is connected thereto. A diameter 47 is machined into a portion of the gate lever 43 normal to its axis and a ball 37 is placed in the diameter 47. The ball 37 is of a size such that when it is sitting on a countersink portion 48 of the diameter 47 it will be wholly within the outside diameter of the gate lever guide 43. When forced out of the countersink portion 48 as depicted in the OPEN position of Figure 3, it will engage an opening 36 in the guide cylinder 33.

A longitudinal trip spindle 49 passes through the spindle plug 42 and extends a distance sufficient to be inserted into the recess 46 of the gate lever guide 43 when it is in the OPEN position. A spring retainer 50 is mounted on the trip spindle 49 and a spindle lock spring 51 extends between the spring retainer 50 and the inside of the spindle plug 42. A gate actuating spring 52 extends between the gate lever guide 43 and the spindle plug 42. A circumference 53 is machined around the trip spindle 49 and an O-ring 54 is positioned within the circumference 53 and acts as a seal.

A clevis yoke 55 is mounted on the end of the trip spindle 49 and a locking pin extends through the clevis yoke 55 and secures an extension 57, shown in dotted lines, which extends from the clevis yoke 55 to a pull-knob or lever (not shown) actuatable by an operator.

Initially, in operation, the engine shutdown valve 10 will be assumed to be in the CLOSED position shown in Figure 3; that is, the gate valve 25 is shown in the position in which the engine will be shutdown by the gate valve 25 blocking the flow of induction air through the manifold. In this position, the ball 37 will be engaged in the countersink portion 48 of the diameter 47 and will be wholly within the inside diameter of the guide cylinder 33 and thus out of engagement with the guide cylinder 33.

A wrench (not shown) is applied to the squared end of the pin 22 and the pin 22 is thereby rotated clockwise as viewed in Figure 3. The gate lever 23 and the gate valve 25 rotate clockwise and the gate lever guide 43, being acted upon by the disc shaped portion 23a of the gate lever 23 engaged in the recess 45, moves against the action of the gate actuating spring 52 to the left as viewed in Figure 3.

As the gate lever guide 43 moves leftwardly, the trip spindle 49 enters the second recess 46 and forces the ball 37 upwardly into the opening 36 in the guide cylinder 33. This restrains the movement of the gate lever guide 43 and, accordingly, stops the movement of the gate lever 23 with the gate valve 25 in the OPEN position.

If an unsafe condition is present and the operator desires to move the gate valve 25 to the CLOSED position, the operator will manually operate a knob or lever (not shown) attached to the extension 57. This will case the trip spindle 49 to move leftwardly against the action of the spindle lock spring 51 and out of the second recess 46. As the trip spindle 49 moves out of the second recess 46, the ball 37 is forced out of the opening 36 in the guide cylinder 33 by the action of the gate actuating spring 52 biassing the gate lever guide 43 rightwardly as viewed in Figure 3. Since the ball 37 is no longer retaining the gate lever guide 43, it will move rightwardly and, therefore, force the gate lever 23 and the gate valve 25 to the CLOSED position thereby stopping the flow of induction air. Thereafter, the valve 10 may again be reset as described above and the sequence will reoccur.

The gate valve 25 has the urethane gas seals 30 mounted on both halves of the gate valve 25. The seals 30 are constantly in contact with the body 18 and the body cover 19 of the gate housing 16 and provide a seal when the gate valve 25 is in the CLOSED position. The seal is enhanced by the plurality of gate spreader springs 29 located about the periphery of the gate valve 25, which spreader springs 29 also act to reduce vibration and, therefore, to reduce wear.

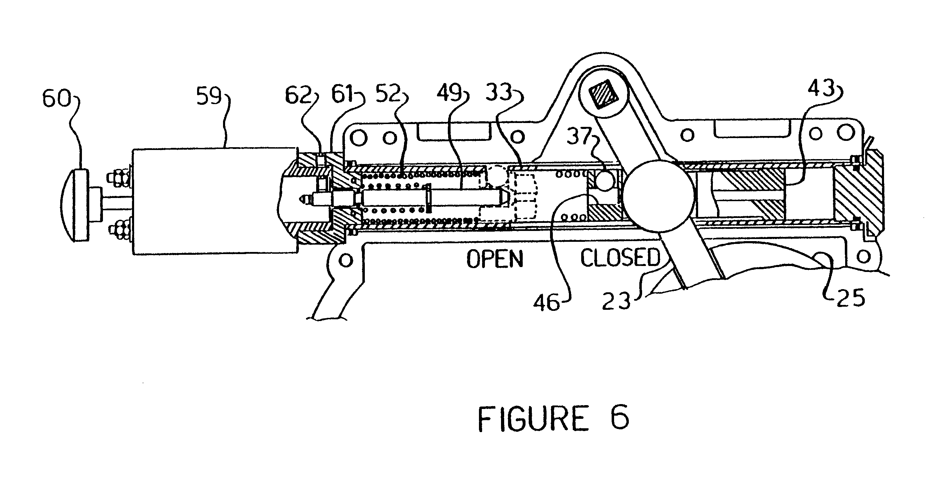

Further embodiments of the invention are depicted in Figures 6—9, each embodiment utilising a different type of gate valve "trip" or "set" mechanism.

Referring to Figure 6, a solenoid 59 is provided to trip the gate lever guide 43 rather than the trip being performed manually. In this embodiment, the gate lever guide 43 is manually moved to the OPEN position as in the embodiment of Figure 3. The solenoid 59, however, is attached to a solenoid adapter 61 by set screws 62. The solenoid adapter 61 takes the place of the spindle plug 42 of the Figure 3 embodiment. A reset knob 60 is pushed into the solenoid 59 to ensure that the spindle 49 protrudes into the second recess 46 in the gate lever guide 43 when the guide 43 is moved leftwardly to the OPEN position.

When it is desired to trip the gate valve 25 in order to move it to the CLOSED position, the solenoid 59 is activated by a suitable D.C. voltage. The trip spindle 49 will retract from the recess 46 in the gate lever guide 43, the ball 37 will be free to move downwardly out of engagement with the guide cylinder 33 and the lever guide 43, the gate lever 23 and hte gate valve 25 will be free to move rightwardly under the action of the gate actuating spring 52 to the CLOSED position. Thereafter, the reset sequence is as previously described.

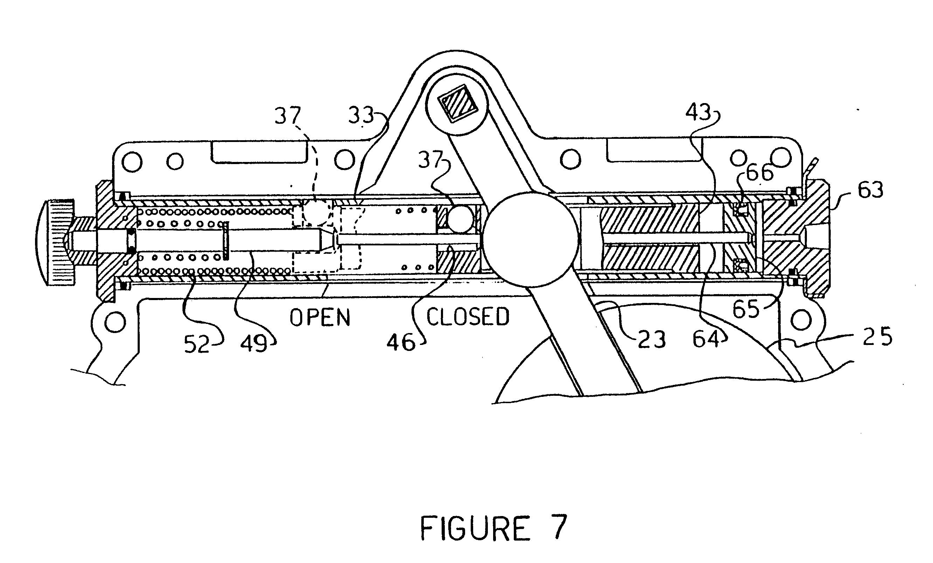

An "air trip" mechanism is used in the embodiment of Figure 7. In this embodiment, the gate lever guide 43 is manually reset to the OPEN position as in the embodiment of Figure 3. However, the plug 40 (Figure 3) is replaced by an air inlet plug 63 and a push rod 64 extends through the port 44 in the gate lever guide 43 and is attached to a piston 65. The piston 65 includes a U-cup seal 66 whch seals the piston 65.

In operation, when it is desired to trip the gate valve 25 from the OPEN to the CLOSED position, air pressure is provided to the air inlet plug 63. The air passes through the plug 63 and exerts pressure on the piston 65 which moves leftwardly together with the push rod 64. The push rod 64 will push against the trip spindle 49 thereby moving it out of the recess 46. When the trip spindle 49 moves out of the recess 46, the ball 37 drops downwardly out of engagement with the guide cylinder 33 and the lever guide 43, the gate lever 23 and the gate valve 25 will be free to move rightwardly under the action of the gate actuating spring 52 to the CLOSED position.

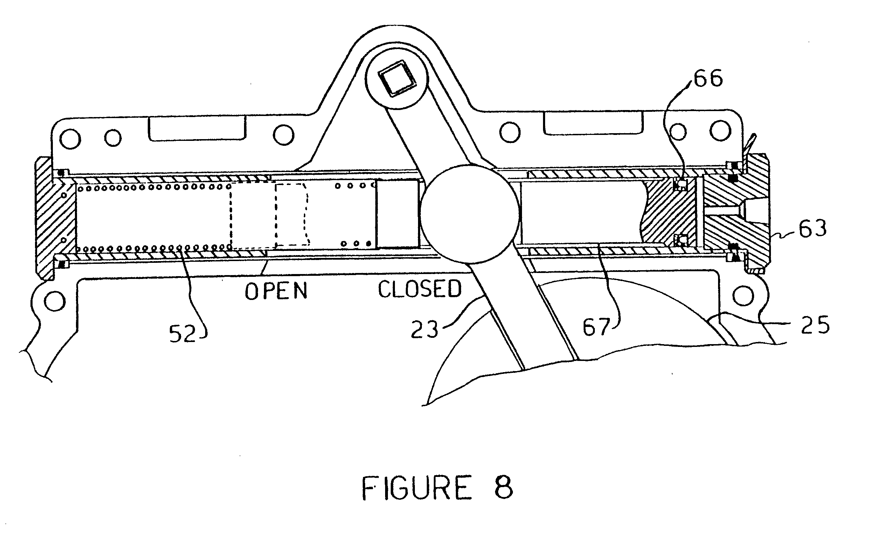

An "air-open" mechanism is depicted in the embodiment of Figure 8. In this embodiment, no trip spindle 49 is used to restrain the gate valve 25 in the OPEN position. Rather, a gate lever guide 67 is used to move the gate valve 25 to the OPEN position. A U-cup seal 66 seals the gate lever guide 67. The gate actuating spring 52 acts directly on the end of gate lever guide 67.

In operation, when it is desired to move the gate valve 25 to the OPEN position, air pressure is applied to the air inlet plug 63. This air pressure causes the gate lever guide 67 together with the gate lever 23 and the gate valve 25 to move leftwardly. When the pressure is discontinued, the gate valve 25 will move to the CLOSED position under the influence of the gate actuating spring 52. In this embodiment therefore, the air pressure must be maintained if it is desired to keep the gate valve 25 in the OPEN position.

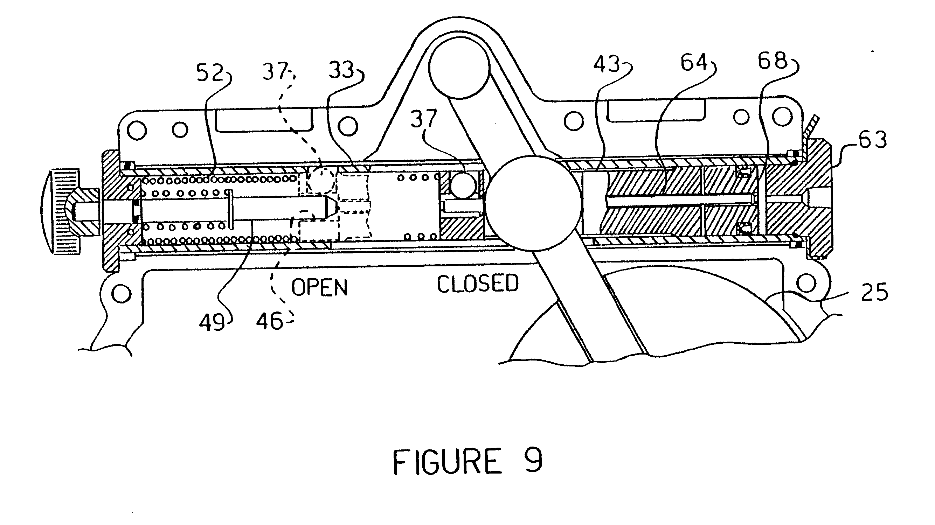

An "auto-set" mechanism is depicted in the embodiment of Figure 9. In this embodiment, a piston 68 is provided which acts on the gate lever guide 43. The gate valve 25 is manually set to the OPEN position as in the embodiment of Figure 3. Air pressure is then supplied to the air inlet plug 63. The air pressure causes the piston 68 and the push rod 64 to move leftwardly disengaging the trip spindle 49 from the recess 46 and allowing the ball 37 to drop downwardly out of engagement with the guide cylinder 33. The piston 68, however, will hold the gate lever guide 3 and, therefore, the gate valve 25 in the OPEN position.

In operation; when it is desired to move the gate valve 25 to the CLOSED position, the air pressure being supplied to the air inlet plug 63 is simply terminated. The termination of the air pressure allows the gate lever guide 43 to move under the influence of the gate actuating spring 52 rightwardly until it reaches the CLOSED position.

## Claims

1. An engine shutdown device to be provided in the induction manifold (11) of an engine and comprising a substantially circular gate valve (25) movable within a valve chamber (16) about an axis (22) between an open position and closed position, a gate lever (23) mounting the gate valve (25) for pivotal movement about the axis (22), latching means (36, 37) to hold the gate valve (25) and the gate lever (23) in the open position, release means (49, 55, 57) to release the latching means (36, 37) and movement means (43, 52) acting on a portion (23a) of the gate lever to move the gate valve (25) and the gate lever (23) from the open to the closed position and back, characterised in that the latching, release and movement means are positioned in a latch chamber (17) of generally cylindrical cross-sectional configuration located exteriorly of the immediately adjacent to the valve chamber (16) and the induction manifold (11) between the axis (22) and the gate valve (25) so that the gate lever (23) passes through the latch chamber (17) to the gate valve (25), said portion (23a) of the gate lever being alinged with the latching, release and movement means within the latch chamber (17).

2. An engine shutdown device according to claim 1 wherein the movement means comprises a compression spring (52) and a gate lever guide (43) reciprocal within the latch chamber (17), the gate lever guide (43) being movable with the gate lever (23) and the compression spring (52) acting upon the gate lever guide (43) in the open position.

3. An engine shutdown device according to claim 1 or claim 2, characterised in that the latching means comprises a detent mechanism, between the gate lever guide (43) and the latch chamber (17) when the gate valve (25) is in the open position.

4. An engine shutdown device according to claim 3, characterised in that the detent mechanism comprises a ball (37) movable between a first position engaging the gate lever guide (43) and the latch chamber (17) to a second position within the gate lever guide (43) and out of engagement with the latch chamber (17) and the release means comprises a rod detent (49) operable to move the ball (37) between the first and second positions, the rod detent (49) being operable externally of the latch chamber (17).

5. An engine shutdown device according to claim 4, characterised in that the rod detent (49) moves the ball (37) by moving longitudinally along the axis of the latch chamber (17) into a recess (46) in the gate lever guide (43), the ball (37) being movable within the gate lever guide (43).

6. An engine shutdown device according to claim 4 or claim 5, characterised in that the detent (49) is operable by a solenoid (59).

7. An engine shutdown device according to claim 5, characterised in that the release means includes a piston (65) movable by air pressure within the latch chamber (17), the piston (65) being operable under the influence of air pressure to move the rod detent (49) out of the recess (46) in the gate lever guide (43).

8. An engine shutdown device according to claim 7, chracterised in that the release means further includes a rod (64) connected to the piston (65), and extending along the axis of the latch chamber (17) and the gate lever guide (43), the rod (64) being operable by movement of the piston (65) to move the rod detent (49) out of the recess (46) in the gate lever guide (43).

9. An engine shutdown device according to claim 2, characterised in that the gate lever guide is formed as a piston operable by air pressure to move the gate lever (23) and the gate valve (25) from the closed to the open position.

10. An engine shutdown device according to claim 9, characterised in that when the air pressure is terminated, the gate valve (25) is moved from the open to the closed position by the movement means (52).

11. An engine shutdown device according to claim 2, characterised by piston means (68) operable by air pressure to move the gate lever guide (43), the gate lever (23) and the gate valve (25) from the closed to the open position.

12. An engine shutdown device according to claim 11, characterised in that a longitudinal rod (64) extends along the axis of the latch chamber (17) through the gate lever guide (43) and is operatively connected to the piston means (68), the longitudinal rod (64) being operable to release the latching (37, 36) means when the piston means (68) moves the gate valve (25) from the closed to the open position.

13. An engine shutdown device according to claim 12, characterised in that the latching means is a detent mechanism, the detent mechanism comprising a ball (37) movable between the first position engaging the gate lever guide (43) and the latch chamber (17) to a second position within the gate lever guide (43) and out of engagement with the latch chamber (17) and the release means comprises a rod detent (49) operable to move the ball (37) between the first and second positions, the longitudinal rod (64) being operable to move the rod detent (49) and allow the ball (37) to move from the first to the second position.

14. An engine shutdown device according to any one of the preceding claims, characterised in that the gate valve (25) comprises two circumferential halves (26, 27), one (27) of the halves being operable to seal the manifold (11) from the downstream side of the shutdown device, the other (26) of the halves being operable to seal the manifold (11) from the upstream side of the shutdown device, and spring means (29) about the peripheries of the circumferential halves (26, 27).

**Patentansprüche**

1. Motorabschaltvorrichtung für die Ansaugleitung (11) eines Motors mit einem im wesentlichen kreisförmigen Absperrventil (25), welches in einer Ventilkammer (16) um eine Achse (22) zwischen einer offenen Stellung und einer geschlossenen Stellung bewegbar ist, einem Absperrhebel (23), der das Absperrventil (25) für eine Schwenkbewegung um die Achse (22) aufnimmt, einer Verriegelungsvorrichtung (36, 37) zum Halten des Absperrventiles (25) und des Absperrhebels (23) in der offenen Stellung, einer Lösevorrichtung (49, 55, 57) zum Lösen der Verriegelungsvorrichtung (36, 37) und einer Bewegungsvorrichtung (43, 52), die auf einen Teil (23a) des Absperrhebels zum Bewegen des Absperrventiles (25) und des Absperrhebels (23) von der offenen in die geschlossene Stellung und umgekehrt wirkt, dadurch gekennzeichnet, daß die Verriegelungs-, Löse- und Bewegungsvorrichtungen in einer Verriegelungskammer (17) von einer im allgemeinen zylindrischen Querschnittsanordnung angeordnet sind, die außerhalb und unmittelbar benachbart zu der Ventilkammer (16) und der Ansaugleitung (11) zwischen der Achse (22) und dem Absperrventil (25) so angeordnet ist, daß der Absperrhebel (23) durch die Verriegelungskammer (17) zu dem Absperrventil (25) geht, wobei der Bereich (23a) des Absperrhebels mit der Verriegelungs-, Löse- und Bewegungsvorrichtung in der Verriegelungskammer abgeglichen ist.

2. Motorabschaltvorrichtung nach Anspruch 1, in der die Bewegungsvorrichtung eine Druckfeder (52) und eine Absperrhebelführung (43) wechselseitig in der Verriegelungskammer (17) aufweist, wobei die Absperrhebelführung (43) bewegbar mit dem Absperrhebel (23) und der Druckfeder (52) ist, die auf die Absperrhebelführung (43) in der offenen Stellung wirkt.

3. Motorabschaltvorrichtung nach Anspruch 1 oder 2, dadurch gekennzeichnet, daß die Verriegelungsvorrichtung einen Arretierungsmechanismus zwischen der Absperrhebelführung (43) und der Verriegelungskammer (17) aufweist, wenn das Absperrventil (25) in der offenen Stellung ist.

4. Motorabschaltvorrichtung nach Anspruch 3, dadurch gekennzeichnet, daß der Arretierungsmechanismus eine Kugel (37) aufweist, die bewegbar ist zwischen einer ersten Stellung, in der sie die Absperrhebelführung (43) und die Verriegelungskammer (17) angreift, und einer zweiten Stellung innerhalb der Absperrhebelführung (43) und nicht im Eingriff mit der Verriegelungskammer (17) und die Lösevorrichtung eine Auslösestange (49) aufweist, die zum Bewegen der Kugel (37) zwischen der ersten und zweiten Stellung bedienbar ist, wobei die Auslösestange (49) außerhalb der Verriegelungskammer (17) bedienbar ist.

5. Motorabschaltvorrichtung nach Anspruch 4, dadurch gekennzeichnet, daß die Auslösestange (49) die Kugel (37) bewegt, indem sie sich längs entlang der Achse der Verriegelungskammer (17) in eine Aussparung (46) in der Absperrhebelführung (43) bewegt, wobei die Kugel (37) bewegbar in der Absperrhebelführung (43) ist.

6. Motorabschaltvorrichtung nach Anspruch 4 oder 5, dadurch gekennzeichnet, daß die Auslösestange (49) durch eine Magnetspule (59) betätigbar ist.

7. Motorabschaltvorrichtung nach Anspruch 5, dadurch gekennzeichnet, daß die Lösevorrichtung einen Kolben (65) aufweist, der durch Luftdruck innerhalb der Verriegelungskammer (17) bewegbar ist und unter dem Einfluß von Luftdruck zum Bewegen der Auslösestange (49) aus der Aussparung (46) in der Absperrhebelführung (43) betätigbar ist.

8. Motorabschaltvorrichtung nach Anspruch 7, dadurch gekennzeichnet, daß die Lösevorrichtung weiter eine Stange (64) aufweist, die mit dem Kolben (65) verbunden ist und sich entlang der Achse der Verriegelungskammer (17) und der Absperrhebelführung (43) erstreckt, wobei die Stange (64) durch die Bewegung des Kolbens (65) zum Bewegen der Auslösestange (49) aus der Aussparung (46) in der Absperrhebelführung (43) bedienbar ist.

9. Motorabschaltvorrichtung nach Anspruch 2, dadurch gekennzeichnet, daß die Absperrhebelführung als Kolben ausgebildet ist, der durch Luftdruck zum Bewegen des Absperrhebels (23) und des Absperrventiles (25) von der geschlossenen in die offene Stellung bedienbar ist.

10. Motorabschaltvorrichtung nach Anspruch 9, dadurch gekennzeichnet, daß, wenn der Luftdruck aufhört, das Absperrventil (25) von der offenen in die geschlossene Stellung durch die Bewegungsvorrichtung (52) bewegt wird.

11. Motorabschaltvorrichtung nach Anspruch 2, gekennzeichnet durch eine Kolbenvorrichtung (68), die durch Luftdruck zum Bewegen der Absperrhebelführung (43), des Absperrhebels (23) und des Absperrventiles (25) von der geschlossenen in die offene Stellung betätigbar ist.

12. Motorabschaltvorrichtung nach Anspruch 11, dadurch gekennzeichnet, daß eine Längsstange (64) sich entlang der Achse der Verriegelungskammer (17) durch die Absperrhebelführung (43) erstreckt und betriebsmäßig mit der Kolbenvorrichtung (68) verbunden ist, wobei die Längsstange (64) zum Loslösen der Verriegelungsvorrichtung (37, 38) betätigbar ist, wenn die Kolbenvorrichtung (68) das Absperrventil (25) von der geschlossenen in die offene Stellung bewegt.

13. Motorabschaltvorrichtung nach Anspruch 12, dadurch gekennzeichnet, daß die Verriegelungsvorrichtung ein Arretierungsmechanismus ist mit einer Kugel (37), die bewegbar zwischen einer ersten Stellung, in der sie die Absperrhebelführung (43) und die Verriegelungskammer (17) angreift, und einer zweiten Stellung in der Absperrhebelführung (43) und nicht im Eingriff mit der Verriegelungskammer (17) bewegbar ist und die Lösevorrichtung eine Auslösestange (49) aufweist, die zum Bewegen der Kugel (37) zwischen der ersten und der zweiten Stellung betätigbar ist, wobei die Längsstange (64) zum Bewegen der Auslösestange (49) und zum Ermöglichen der Kugel (37), sich von der ersten in die zweite Stellung zu bewegen, betätigbar ist.

14. Motorabschaltvorrichtung nach einem der vorhergehenden Ansprüche, dadurch gekennzeichnet, daß das Absperrventil (25) zwei Umfangshälften (26, 27) aufweist, wobei eine der Hälften (27) zum Verschließen der Ansaugleitung (11) von der stromabwärtigen Seite der Abschaltvorrichtung betätigbar ist und die andere der Hälften (26) zum Verschließen der Ansaugleitung (11) von der stromaufwärtigen Seite der Abschaltvorrichtung betätigbar ist, und eine Federvorrichtung (29) um die äußeren Umfänge der Umfangshälften (26, 27) aufweist.

## Revendications

1. Dispositif de mise à l'arrêt de moteur à prévoir dans la tubulure d'admission (11) d'un moteur et comprenant un robinet-vanne sensiblement circulaire (25) mobile dans une chambre de robinet (16) autour d'un axe (22) entre une position d'ouverture et une position de fermeture, un levier de vanne (23) montant le robinet-vanne (25) mobile à pivotement autour de l'axe (22), un moyen de verrouillage (36, 37) pour le maintien du robinet-vanne (25) et du levier de vanne (23) dans la position d'ouverture, un moyen de libération (49, 55, 57) pour la libération du moyen de verrouillage (36, 37) et un moyen de déplacement (43, 52) agissant sur une partie (23a) du levier de vanne pour déplacer le robinet-vanne (25) et le levier de vanne (23) de la position d'ouverture à celle de fermeture et retour, caractérisé en ce que les moyens de verrouillage, de libération et de déplacement sont placés dans une chambre de verrou (17) à section de configuration générale cylindrique située à l'extérieur et au voisinage immédiat de la chambre de vanne (16) et de la tubulure d'admission (11) entre l'axe (22) et le robinet-vanne (25) de sorte que le levier de vanne (23) traverse la chambre de verrou (17) pour atteindre le robinet-vanne (25), ladite partie (23a) du levier de vanne étant alignée avec les moyens de verrouillage, de libération et de déplacement à l'intérieur de la chambre de verrou (17).

2. Dispositif de mise à l'arrêt de moteur selon la revendication 1, dans lequel le moyen de déplacement comprend un ressort de compression (52) et un guide-levier de vanne (43) mobile à va-et-vient dans la chambre de verrou (17), le guide-levier de vanne (43) étant mobile avec le levier de vanne (23) et le ressort de compression (52) agissant sur le guide-levier de vanne (43) dans la position d'ouverture.

3. Dispositif de mise à l'arrêt de moteur selon la revendication 1 ou la revendication 2, caractérisé en ce que le moyen de verrouillage comprend un mécanisme à cliquet, situé entre le guide-levier de vanne (43) et la chambre de verrou (17) quand le robinet-vanne (25) est dans la position d'ouverture.

4. Dispositif de mise à l'arrêt de moteur selon la revendication 3, caractérisé en ce que le mécanisme à cliquet comprend une bille (37) mobile entre une première position de contact avec le guide-levier de vanne (43) et la chambre de verrou (17) et une seconde position intérieure au guide-levier de vanne (43) et de non contact avec la chambre de verrou (17) et le moyen de libération comprend une tige-détente (49) agissant pour déplacer la bille (37) entre les première et seconde positions, la tige-détente (49) agissant pour déplacer la bille (37) entre les première et seconde positions, la tige-détente (49) étant manoeuvrable extérieurement à la chambre de verrou (17).

5. Dispositif de mise à l'arrêt de moteur selon la revendication 4, caractérisé en ce que la tige-détente (49) déplace la bille (37) en l'amenant longitudinalement suivant l'axe de la chambre de verrou (17) à l'intérieur d'un évidement (46) du guide-levier de vanne (43), la bille (37) étant mobile à l'intérieur du guide-levier de vanne (43).

6. Dispositif de mise à l'arrêt de moteur selon la revendication 4 ou 5, caractérisé en ce que la détente (49) est manoeuvrable par un solénoïde (59).

7. Dispositif de mise à l'arrêt de moteur selon la revendication 5, caractérisé en ce que le moyen de libération comporte un piston (65) mobile sous l'effet d'une pression d'air à l'intérieur de la chambre de verrou (17), le piston (65) agissant sous l'effet de pression d'air pour faire sortir la tige-détente (49) de l'évidement (46) du guide-levier de vanne (43).

8. Dispositif de mise à l'arrêt de moteur selon la revendication 7, caractérisé en ce que le moyen de libération comporte encore une tige (64) reliée au piston (65), et s'étendant suivant l'axe de la chambre de verrou (17) et du guidelevier de vanne (43), la tige (64) étant manoeuvrable par déplacement du piston (65) pour faire sortir la tige-détente (49) de l'évidement (46) du guide-levier de vanne (43).

9. Dispositif de mise à l'arrêt de moteur selon la revendication 2, caractérisé en ce que le guide-levier de vanne est réalisé sous forme de piston manoeuvrable par pression d'air pour deplacer le levier de vanne (23) et le robinet-vanne (25) de la position de fermeture jusqu'à la position d'ouverture.

10. Dispositif de mise à l'arrêt de moteur selon la revendication 9, caractérisé en ce que quand la pression d'air cesse de s'exercer, le robinet-vanne (25) est amené de la position d'ouverture dans celle de fermeture par le moyen de déplacement (52).

11. Dispositif de mise à l'arrêt de moteur selon la revendication 2, caractérisé par un moyen du type piston (68) manoeuvrable par pression d'air pour déplacer le guide-levier de vanne (43), le levier de vanne (23) et le robinet-vanne (25) de la position de fermeture à celle d'ouverture.

12. Dispositif de mise à l'arrêt de moteur selon la revendication 11, caractérisé en ce qu'une tige longitudinale (64) s'étend suivant l'axe de la chambre de verrou (17) à travers le guide-levier de vanne (43) et est accouplée au moyen du type piston (68), la tige longitudinale (64) agissant pour libérer le moyen de verrouillage (37, 36) quand le moyen du type piston (68) déplace le robinet-vanne (25) de la position de fermeture à celle d'ouverture.

13. Dispositif de mise à l'arrêt de moteur selon la revendication 12, caractérisé en ce que le moyen de verrouillage est un mécanisme à cliquet, le mécanisme à cliquet comprenant une bille (37) mobile entre une première position de contact avec le guide-levier de vanne (43) et la chambre de verrou (17) et une seconde position intérieure au guide-levier de vanne (43) et de non contact avec la chambre de verrou (17) et le moyen de libération comprend une tige-détente (49) agissant pour déplacer la bille (37) entre les première et seconde positions, la tige longitudinale (64) agissant pour déplacer la tige-détente (49) et permettre à la bille (37) de passer de la première position à la seconde.

14. Dispositif de mise à l'arrêt de moteur selon l'une quelconque des revendications précédentes, caractérisé en ce que le robinet-vanne (25) comprend deux moitiés circonférentielles (26, 27), l'une (27) des moitiés agissant pour étancher la tubulure (11) à partir du côté d'aval du dispositif de mise à l'arrêt, l'autre (26) des moitiés agissant pour étancher la tubulure (11) à partir du côté d'amont du dispositif de mise à l'arrêt, et un moyen du type ressort (29) entourant les pourtours des moitiés périphériques (26, 27).

0 106 484

FIGURE 1

FIGURE 2

FIGURE 3

FIGURE 4

4

FIGURE 5

FIGURE 6

FIGURE 7

66

63

OPEN        CLOSED

52        23        67        25

FIGURE 8

FIGURE 9